# EUROPEAN PATENT APPLICATION

(11) **EP 2 405 366 A1**
(43) Date of publication of application: **11.01.2012**
(21) Application number: 11005624.9
(22) Date of filing: 08.07.2011
(51) Int. Cl.: G06F 17/30

(54) **Method for synchronizing data within mobile communities**

(30) Priority: 09.07.2010 EP 10007078; 09.07.2010 US 362795 P
(71) Applicant: T-Mobile Austria GmbH, 1030 Wien (AT)
(72) Inventor: Prikowitsch, Florian, 2304 Orth an der Donau (AT); Schandl, Daniel, 3441 Judenau (AT)
(74) Representative: Schwöbel, Thilo K.

(57) **Abstract**

Method, mobile device, processing means, system, program and computer program product for synchronizing data related to a communication event between a first mobile device and a second mobile device, wherein the communication event comprises a voice and/or data transfer between the first mobile device and the second mobile device, wherein the first mobile device and the second mobile device comprise means to communicate with a mobile radio network, wherein the first mobile device and the second mobile device comprise processing means, wherein a first step comprises that due to a user action event related to the communication event, wherein the processing means of the first mobile device modifies a first data element stored in the first mobile device, wherein the first data element and/or the modified first data element are related to the communication event, wherein a second step comprises that the processing means of the first mobile device generates a synchronization message, wherein the synchronization message is related to the modification of the first data element, wherein a third step comprises that the synchronization message is transmitted from the first mobile device to the second mobile device, wherein a fourth step comprises the reception and the handling of the synchronization message by the processing means of the second mobile device such that a second data element stored in the second mobile device is modified, wherein the modified second data element corresponds to the modified first data element.

## Description

The present invention relates to a method for synchronizing data related to a communication event between a first mobile device and a second mobile device, and particularly between a first mobile device and a group of second mobile devices.

Within the last years, mobile communication has widely spread and has become one of the dominant telecommunication techniques in our everyday life. This development is mainly driven by the demand of people to communicate with other people at any time and at any place and to share all different kinds of information like messages, photos, images, audio files or videos. Therefore, nowadays, a large variety of devices are available that incorporate functionality to communicate with a mobile radio network. Such mobile devices are by far not limited to conventional mobile phones any more, but many other devices like, e. g., laptop computers. PDAs, digital cameras, video recorders, multimedia players, etc., are included as well. Often, a user owns more than one mobile device, e.g., a private mobile phone, a business mobile phone and a PDA, each capable of sending and receiving messages and/or calls over the mobile radio network. In general, each of such mobile devices comprises a separate SIM (Subscriber Identity Module) card, wherein each SIM card is related to a different MSISDN (Mobile Subscriber Integrated Services Digital Network Number), i. e., each device is available under a different phone number. Communication events like incoming messages or calls addressing the same user are, thus, usually spread among a plurality of mobile devices, since a calling party intending to communicate with said user has the choice of using a plurality of phone numbers. This means that on the one hand a user is more or less forced to carry along with him all different mobile devices at any time to ensure full communication availability and that on the other hand data related to communication events like, e. g., messages and notifications of incoming messages and calls, are only stored on the mobile device being addressed by the calling party and are not accessible from any of the other mobile devices owned by the user. This makes the handling of communication events very inconvenient.

In this context, MultiSIM services have been introduced by some mobile network operators allowing a plurality of mobile devices to form a MultiSIM community, wherein each mobile device of the MultiSIM community shares the same MSISDN. Hence, each mobile device of the MultiSIM community is available under the same phone number allowing a user to receive each incoming communication event, e. g., a phone call and/or a message, addressing the MultiSIM community with any of the mobile devices of the MultiSIM community. However, by using a MultiSIM service the above mentioned drawbacks are only partially overcome, since no information about how an incoming communication event has further been handled by the user on one of the mobile devices is shared with the other mobile devices of the MultiSIM community. For example, if a user accepts an incoming phone call on one of the mobile devices of a MultiSIM community other mobile devices of the MultiSIM community will not recognize that the incoming phone call has been accepted and will, thus, state the incoming phone call as "missed". Similarly, information about whether an incoming message has been read, deleted or answered by the user on one of the mobile devices of the MultiSIM community is not shared with the other mobile devices of the MultiSIM community. This leads to an inconsistency of data related to a communication event among the MultiSIM community and, thus, the handling of communication events remains rather unsatisfying even by using MultiSIM services.

Thus, to have all data related to communication events like, e. g., messages and notifications of incoming messages and calls, consistently available on each mobile device of a group of mobile phones, data related to such communication events has to be synchronized among the group of mobile devices. In general, methods to synchronize data between mobile devices are known in the prior art, e. g., the patent application US 2007/0255785 A1 discloses a method to share multimedia information, i. e., graphical and/or audio information, on a mobile device within a social network. However, a method for comprehensively synchronizing data related to a communication event among a group of mobile devices is not known in the prior art.

### SUMMARY

An object of the present invention is to provide a method, a mobile device, a processing means and a computer software product to synchronize data related to a communication event between a first mobile device and a second mobile device and, particularly, between a first mobile device and a group of second mobile devices such that the above mentioned drawbacks of the prior art are avoided.

Hereinafter, a "mobile device" is any portable device that provides functionality to communicate with a mobile radio network, e. g., a mobile phone, a smart phone, a PDA or a laptop computer comprising a mobile radio network interface, etc..

In the context of the present invention, a "communication event" is any type of voice or data transfer between at least two devices like, e. g., the transmission of a phone call and/or a SMS and/or a MMS and/or a IM (Instant Message) and/or a fax and/or an e-mail.

Moreover, in the context of the present invention, a data element is related to a communication event, if the data element comprises information of the data transferred by the communication event like, e. g., information of the content of a transmitted text message or voice message, and/or if the data element comprises information of the data transfer itself like, e. g., information of the transferred data volume and/or the time of data transfer or the communication channel used for the data transfer and/or the addresser of the data transfer, and/or if the data element comprises information of how the communication event has been handled by the recipient, e. g., information about whether an incoming message has been accepted, read, answered or deleted by the recipient.

Furthermore, in the context of the present invention, "modifying a data element" means either that a new data element is generated or that an existing data element is modified according to its classical meaning, i. e., the data content of the data element is changed, or that an existing data element is deleted. In the latter case, the modified data element can be considered to be a virtual data element having an empty data content.

Moreover, in the context of the present invention, a "user action event" is any event caused by an action of the user related to a communication event like, e. g., a command sent to the mobile device via the user interface of said mobile device. For instance, such commands include commands to answer or reject a call, to read or delete a message or to send a message or a call.

Moreover, in the context of the present invention, a first data element corresponds to a second data element if the first data element comprises the same data content as the second data element and/or if the first data element comprises at least the same information related to a communication event as the second data element. For example, in the context of the present invention, a first data element corresponds to a second data element, if the first data element has a different file format than a second data element, but comprises the same information as the second data element, e. g., the same text content of a message.

The object of the present invention is solved by a method for synchronizing data related to a communication event between a first mobile device and a second mobile device, wherein the communication event comprises a voice and/or data transfer between the first mobile device and the second mobile device, wherein the first mobile device and the second mobile device comprise means to communicate with a mobile radio network, wherein the first mobile device and the second mobile device comprise processing means, wherein a first step comprises that due to a user action event related to the communication event the processing means of the first mobile device modifies a first data element stored in the first mobile device, wherein the first data element and the modified first data element are related to the communication event, wherein a second step comprises that the processing means of the first mobile device generates a synchronization message, wherein the synchronization message is related to the modification of the first data element, wherein a third step comprises that the synchronization message is transmitted from the first mobile device to the second mobile device, wherein a fourth step comprises the reception and the handling of the synchronization message by the processing means of the second mobile device such that a second data element stored in the second mobile device is modified, wherein the modified second data element corresponds to the modified first data element.

According to the present invention, it is, thereby, advantageously possible to synchronize data related to a communication event between a first mobile device and a second mobile device and, in particular, between a first mobile device and a group of second mobile devices. It is, thereby, advantageously possible to assure that data related to a communication event stored in a plurality of mobile devices are kept consistent to each other so that communication events can be handled in a very efficient and convenient way. According to the present invention, it is advantageously possible to process data related to the communication event, e.g. the information whether an incoming call was answered by a second mobile device out of the group of second mobile devices and/or whether an incoming SMS was read by a second mobile device out of the group of second mobile devices. In case, e.g., an SMS was sent from an external sender to one second mobile device out of the group of second mobile devices, all the second mobile devices automatically receive this SMS. In case, one second mobile device out of the group of second mobile devices reads this SMS and the status of the SMS changes from "unread" to "read" on this second mobile device, the information about this status change is transferred to all second mobile devices, which changes the status of the SMS on all second mobile devices from "unread" to "read".

According to the present invention, it is preferred that the processing means of the first mobile device comprises a database, wherein the database comprises a list of second mobile devices, wherein the synchronization message is transmitted to at least a portion of the list of second mobile devices.

According to the present invention, it is thereby advantageously possible that a user defines a group of mobile devices, wherein data related to a communication event is then synchronized among this group of mobile devices. According to the present invention, it is possible that each of the group of mobile devices is owned by the same user and/or is available under the same phone number (e. g., if the group of mobile devices forms a MultiSIM community) or that each of the group of mobile devices are owned by different users and are available under different phone numbers. Thus, data related to a communication event can either be synchronized among a group of mobile devices owned by a single user and/or among a group of mobile devices owned by different users.

According to the present invention, it is, furthermore, preferred that the database comprises a list of preferred communication channels assigned to each one of the list of second mobile devices, wherein at least one of the preferred communication channels is used to transmit the synchronization message to the portion of the list of second mobile devices.

According to the present invention, it is thereby advantageously possible that a user defines a list of preferred communication channels for each second mobile device of the list of second mobile devices. It is, thereby, advantageously possible that a synchronization message from the first mobile device to the second mobile device is transmitted via a preferred communication channel. For example, to minimize costs for data transfer the preferred communication channel can be defined to be a transmission via a Bluetooth connection data.

According to the present invention, it is preferred that the synchronization message can be transmitted via any communication channel supported by the first and the second mobile device. Thus, the method according to the present invention is not limited to the use of particular communication channels and applicable within any type of network like, e. g., PLMN (Public Land Mobile Network), PSTN (Public Switched Telephone Network) and IP-based networks. Therefore, a high flexibility is assured. Preferably, the synchronization message is transmitted over a mobile radio network, e. g., using a SMS and/or a binary SMS. It is, thereby, advantageously possible to even synchronize data over long distances. Furthermore, nowadays, almost all mobile devices provide functionality to send and receive SMS messages and, thus, a widespread availability for synchronizing data according to the present invention is ensured. More preferably, the synchronization message is transmitted via a packet oriented mobile data service, e. g., via GPRS (General packet radio service). Thereby, it is advantageously possible to transfer even a larger volume of data. Moreover, nowadays, contracts for mobile phones comprising data flat rates are widely spread so that the use of a packet oriented mobile data service is advantageously cost-saving. Even more preferably, the synchronization message is transmitted via a short-range wireless connection like, e. g., a Bluetooth connection and/or a WLAN connection and/or an infrared connection. Thereby, it is advantageously possible that data can be synchronized substantially free of charge.

According to the present invention, it is preferred that the first data element and/or the modified first data element comprise information of a message, preferably a voice message and/or a text message and/or a multimedia message. Preferably, such a message is an incoming message received by the first mobile device and stored in the first mobile device- More preferably, the message is generated by a user action event on the first mobile device and stored in the first mobile device. For example, if a user sends a SMS to a third party using the first mobile device a copy of said SMS will usually be stored as a modified first data element in the first mobile device, e. g., in a data folder called "sent messages", wherein this modified first data element will then be synchronized with a second mobile device according to the method of the present invention.

According to the present invention, it is, thereby, advantageously possible to synchronize information of a voice message and/or a text message and/or a multimedia message between a first mobile device and a second mobile device using any communication channel supported by the first and the second mobile device.

According to the present invention, it is, furthermore, advantageously possible that information of a message received by a first mobile device via a first communication channel is transferred to a second mobile device via a second communication channel. For example, it is possible that a first mobile device receives a MMS, wherein information of the MMS is stored in the first mobile device, wherein said information is then synchronized with a second mobile device by means of a synchronization message transmitted, e. g., via a Bluetooth connection. Thus, the information of the MMS can be transferred from the first mobile device to the second mobile device, even if the second mobile device does not comprise means to receive a MMS over the mobile radio network. A further example is that a first mobile device is connected to an online social network, e. g., to Skype, via GPRS and receives an IM (Instant Message). According to the present invention, the information of the IM can then be transferred via a synchronization message to a second mobile device using, e. g., a SMS such that a user can read the IM on the second mobile device, even if the second mobile device is currently not connected to the online social network. One skilled in the art understands that many other embodiments are possible as well.

According to the present invention, it is furthermore preferred that the first data element and/or the modified first data element comprise information of a message state and/or a call state.

In the context of the present invention, a message state and/or a call state indicate how a message and/or a call have been handled by a user. For example, due to an incoming call on a first mobile device a call state will be generated on the first mobile device which will comprise the information "call missed", if the user of the first mobile device does not answer the call, or which will comprise the information "rejected", if the user rejects the call, or which will comprise the information "accepted", if the user accepts the call. Similarly, incoming messages can be characterized by states such as "new", "unread", "read", or "marked".

According to the present invention, it is, thereby, advantageously possible to synchronize information of a message state and/or a call state between a first mobile device and a second mobile device. Thus, communication events can be handled in a very convenient way and some of the above mentioned drawbacks of the prior art, e. g., drawbacks related to a MultiSIM service, can be avoided. For example, if a user owns a first mobile device and a second mobile device, wherein both mobile devices belong to MultiSIM community, i. e., both mobile devices are available under the same phone number, a call addressing said phone number will be directed simultaneously to both mobile devices. However, the user can only accept the call on one of those mobile devices, e. g., on the first mobile device so that a first call state comprising the information that the call has been accepted is generated on the first mobile device, whereas a second call state comprising the information that the call has been missed is generated on the second mobile device. According to the prior art, the information about how the call has been handled stored in the first mobile device and in the second mobile device remains inconsistent to each other. However, according to the present invention, it is advantageously possible that a synchronization message is sent from the first mobile device to the second mobile device so that the call state stored in the first mobile device and the call state stored in the second mobile device are synchronized, i.e., the second call state is being modified such that it will comprise the information that the call has been accepted.. According to the present invention, it is, thereby, advantageously possible that data comprising information of a message and/or a call state can be kept consistent among a group of mobile devices.

According to the present invention, it is furthermore preferred that the synchronization message is transmitted automatically by the processing means due to the communication event and/or the user action event.

According to the present invention, it is, thereby, advantageously possible that data related to a communication event is synchronized automatically between a first mobile device and a second mobile device so that it is assured that data related to the communication event stored in the first mobile device and data related to the communication event stored in the second mobile device are kept consistent each other. Preferably, the synchronization message is generated and transmitted by the processing means as a background process on the first mobile device so that a user of the first mobile device is not disturbed during the usage of the first mobile device.

According to the present invention, it is preferred that a fifth step of the method according to the present invention comprises that a server synchronization message is generated by the processing means of the first mobile device, wherein the server synchronization message is related to the synchronization message, wherein a sixth step comprises that the server synchronization message is transmitted to a subscription server, wherein the subscription server comprises a server database, wherein a seventh step comprises that a data element related to the server synchronization message is stored in the server database.

According to the present invention, it is thereby advantageously possible to monitor and record synchronization events of a user on a subscription server so that the synchronization records can be further processed by additional network instances. For example, a mobile radio network provider who provides a synchronization service according to the present invention can use the synchronization records to bill customers.

The present invention furthermore relates to a mobile device, wherein the mobile device comprises a processing means, wherein the mobile device comprises functionality to synchronize data related to a communication event between the mobile device and a second mobile device according to the inventive method of the present invention.

According to the present invention, it is, thereby, advantageously possible to assure the synchronization of data related to a communication event between a first mobile device and a second mobile device. Thereby, it is advantageously possible to assure that data related to a communication event stored in different mobile devices are kept consistent to each other.

The present invention, furthermore, relates to a processing means, wherein the processing means comprises functionality to modify a data element of a mobile device due to a user action event related to the communication event, wherein the processing means comprises functionality to generate a synchronization message related to the modification of the data element, wherein the processing means comprises functionality to receive and to handle a synchronization message according to the method of the present invention.

According to the present invention, it is, thereby, advantageously possible to assure that each mobile device comprising the processing means according to the present invention is capable of generating, transmitting, receiving and handling a synchronization message according to the method of the present invention. Thus, it is possible to assure synchronization of data related to a communication event among a group of mobile devices.

According to the present invention, it is preferred that the processing means comprises a database, wherein the database comprises a list of mobile devices, wherein the database comprises a list of preferred communication channels assigned to each mobile device of the list of mobile devices.

According to the present invention, it is, thereby, advantageously possible that a list of mobile devices is defined by a user, wherein data related to a communication event stored in a first mobile device is synchronized with at least a portion of the list of mobile devices according to the present invention. Furthermore, it is advantageously possible to assign a list of preferred communication channels to each mobile device of the list of mobile devices, wherein synchronization will be performed via at least one of the preferred communication channels. Thus, it is possible to assure that a communication channel used to transmit a synchronization message from a first mobile device to a second mobile device is supported by the second mobile device.

The present invention furthermore relates to a system In a mobile radio network, wherein the system comprises a first mobile device and a second mobile device, wherein the communication between the first mobile device and the second mobile device comprises a synchronization message according to the method of the present invention.

According to the present invention, it is thereby advantageously possible to assure synchronization of data related to a communication event between a first mobile device and a second mobile device.

According to the present invention, it is preferred that the system comprises a subscription server, wherein the communication between the first mobile device and the subscription server comprises a server synchronization message according to the method of the present invention.

According to the present invention, it is thereby advantageously possible to monitor and record synchronization events of a user on the subscription server and to use the synchronization records for further processing like billing.

The present invention, furthermore, relates to a program comprising a computer readable program code and a computer program product comprising the computer readable program code that when executed on processing means of a first mobile device and a second mobile device according to the present invention provides functionality to synchronize data related to a communication event between the first mobile device and the second mobile device according to the method of the present invention.

According to the present invention, it is thereby advantageously possible to assure synchronization of data related to a communication event between a first mobile device and a second mobile device.

According to the present invention, it is preferred that the program can be downloaded from a website directly to a mobile device and then be installed on the mobile device and/or that the program can be installed by means of a computer connected to the mobile device via an appropriate data link and/or that the program is stored on the SIM card and is being installed when the SIM card is inserted into the mobile device. As soon as being installed the program preferably runs as a background application on the mobile device and acts as a kind of filter which is capable of mapping any necessary communication interface to an upper communication layer. Thereby, it is advantageously possible that communication events and user action events are handled by the program without any delay.

According to the present invention, it is furthermore preferred that the program can already be preinstalled on the mobile device as part of a firmware of the mobile device. In this case, it is advantageously possible that the necessary communication interfaces have already been embedded in the mobile device by the manufacturer of the mobile device.

According to the present invention it is furthermore preferred that the program has to be activated on a mobile device by transmitting identification data like the MSISDN (Mobile Subscriber Integrated Services Digital Network Number) and/or the IMSI (International Mobile Subscriber Identity) of the mobile device to a subscription server once before being usable for synchronizing data related to a communication event between a first mobile device and a second mobile device. According to the present invention it is thereby advantageously possible that the identification data of the mobile device is stored on a server database and can be used for further processing like billing.

These and other characteristics, features and advantages of the present invention will become apparent from the following detailed description, taken in conjunction with the accompanying drawings, which illustrate, by way of example, the principles of the invention. The description is given for sake of example only, without limiting the scope of the invention. The reference figures quoted below refer to the attached drawings.

### BRIEF DESCRIPTION OF THE DRAWINGS

Figure 1 shows schematically a mobile device according to a preferred embodiment of the present invention.

Figure 2 shows schematically an embodiment of the activation of a program according to the present invention.

Figure 3 shows schematically a first embodiment of synchronizing data related to a communication event according to the present invention.

Figure 4 shows schematically a second embodiment of synchronizing data related to a communication event according to the present invention.

Figure 5 shows schematically a third embodiment of synchronizing data related to a communication event according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e. g., "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Any person skilled in the art will understand that other modifications or varieties of the invention are possible without departing from the broader spirit of the invention. Such modifications are therefore to be considered as falling within the spirit and the scope of the invention and hence forming part of the invention as herein described or exemplified. Accordingly, the exemplary description is to be regarded in an illustrative sense rather than in a restrictive sense.

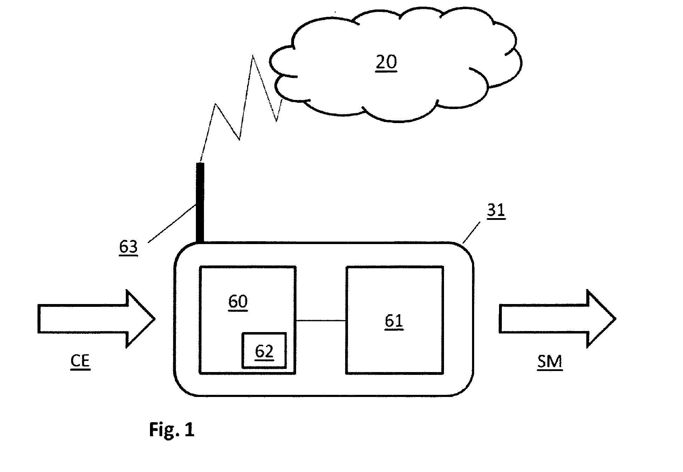

Figure 1 shows schematically a mobile device 31 according to a preferred embodiment of the present invention, wherein the mobile device 31 comprises a means 63 to communicate with a mobile radio network 20, wherein the mobile device 31 comprises a processing means 60, wherein the processing means 60 comprises a database 61 and a program 62 for synchronizing data related to a communication event between the mobile device 31 and a second mobile device (not illustrated). According to the present invention, the database 61 comprises a list of second mobile devices, wherein each second mobile device of the list of second mobile devices is defined, e. g., by a MSISDN or IMSI, wherein the database 61 further comprises a list of preferred communication channels assigned to each second mobile device of the list of second mobile devices. Preferably, the list of second mobile devices and the list of preferred communication channels are configurable by a user via the graphical user interface of the mobile device 31. By executing the program 62 on the processing means 60 functionality for synchronizing data related to a communication event between the mobile device 31 and a second mobile device is provided so that due to a communication event CE, e. g., an incoming SMS or MMS, a data element stored in the mobile device 31 will be modified by the processing means 60, wherein the modified data element is related to the communication event CE, wherein a synchronization message SM related to the modification of the data element will be generated by the processing means 60, wherein the synchronization message SM will be transmitted to at least a portion of the list of second mobile devices stored in the database 61, wherein preferably at least one preferred communication channel of the list of preferred communication channels assigned to each second mobile device of the portion of the list of second mobile devices is used for the transmission of the synchronization message SM.

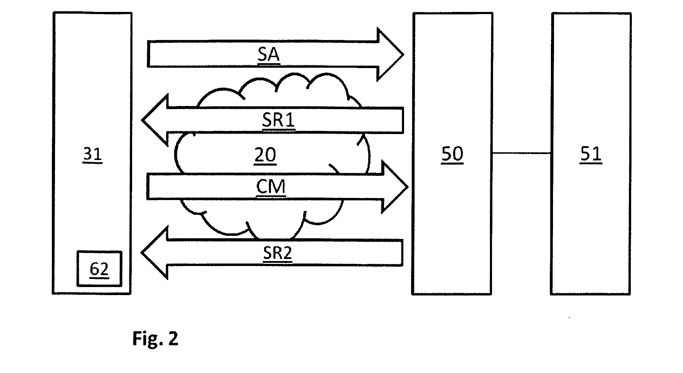

Figure 2 shows schematically an embodiment of the activation of a program 62 for synchronizing data related to a communication event between a first mobile device and a second mobile device according to the present invention, wherein the program 62 is installed on a mobile device 31, wherein a user starts the program 62 via the graphical user interface of the mobile device 31 and selects a command for activating the synchronization service according to the present invention. Thereby, a service activation message SA is transmitted over the mobile radio network 20 to a subscription server 50 using, e. g., a binary SMS. The service activation message SA comprises identification data of the mobile device 31 like, e. g., the MSISDN and/or the IMSI, so that the subscription server 50 can identify the user. After receiving the service activation message SA, an entry related to the identification data is generated in a server database 51. Alternatively, the identification data is compared by the subscription server 50 with user data already stored in the server database 51. With regard to the received identification data a server response message SR1 is generated by the subscription server 50 and transmitted via the mobile radio network 20 to the mobile device 31, e. g., using a binary SMS, wherein the server response message SR1 preferably comprises information related to user-specific restrictions concerning the usage of the synchronization service. Such restrictions are, e. g., restrictions to use the synchronization service only within a certain mobile radio network. Thereby, mobile network operator can assure, e. g., that the synchronization service is only made available for mobile devices connected to the mobile radio network 20 of the mobile network operator. The server response message SR1 is received by the mobile device 31, wherein, e. g., a message on the graphical user interface of the mobile device 31 appears and wherein the user is requested to confirm the activation of the program 62 by pressing a certain button on the mobile device 31. The confirmation is then transmitted as a confirmation message CM from the mobile device 31 to the subscription server 50 via the mobile radio network 20 using, e. g., again a binary SMS. Finally, the confirmation message CM is processed by the subscription server 50 and a second server response message SR2 is transmitted to the mobile device 31 via the mobile radio network 20 using, e. g., again a binary SMS. The second server response message SR2 is received by the mobile device 31 and finally activates the program 62 such that the synchronization service is, henceforth, available on the mobile device 31.

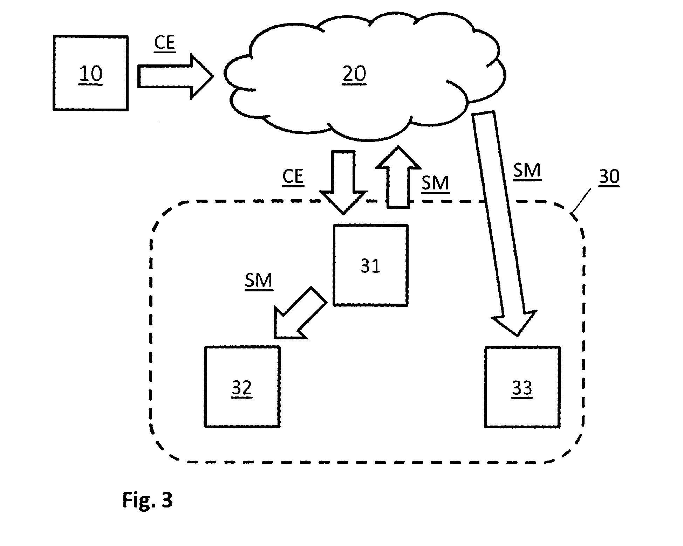

Figure 3 shows schematically a first embodiment of synchronizing data related to a communication event according to the present invention, wherein a third party 10 transmits a message CE over a mobile radio network 20 using, e. g., a SMS, to a first mobile device 31, e.g, a mobile phone, of a group of mobile devices 30. The message CE is received by the first mobile device 31, wherein due to the reception of the message CE a first data element stored in the first mobile device 31 is modified by a processing means of the first mobile device 31, wherein the modified first data element is related to the received message CE. For example, the modified first data element can comprise information of the data content of the message CE and/or information of the addresser of the message CE and/or information of the data volume of the message CE, etc.. After the modification of the first data element, the processing means of the first mobile device 31 generates a synchronization message SM related to the modification of the first data element. Preferably, the synchronization message SM comprises the full data content or at least a part of the data content of the modified first data element. The synchronization message SM is then transmitted to a second mobile device 32, e. g., a PDA, and a third mobile device 33, e. g., a smart phone, of the group of mobile devices 30. According to the present invention, it is possible that the synchronization message SM is transmitted to the second mobile device 32 via a first communication channel, e. g., via a Bluetooth connection, whereas the synchronization message SM is transmitted to the third mobile device 33 via a second communication channel over the mobile radio network 20 using, e. g., a SMS. Such transmission is, e. g., preferable, if the second mobile device 32 is in short-range distance to the first mobile device 31 such that the synchronization message SM can be transmitted via a Bluetooth connection and, thus, free of charge, wherein the third mobile device 33 is not in short-range distance and, thus, only available over the mobile radio network 20. The synchronization message SM is then received by the second and third mobile device 32, 33 and is processed by processing means of the second and third mobile device 32, 33 such that a second data element stored in the second mobile device 32 is modified and such that a third data element stored in the third mobile device 33 is modified, wherein the modified second data element and the modified third data element correspond to the modified first data element, i. e., the modified second data element and the third modified data element comprise information of the incoming message CE received by the first mobile device 31. Thus, the information of the incoming message CE has been made available on the second mobile device 32 and on the third mobile device 33.

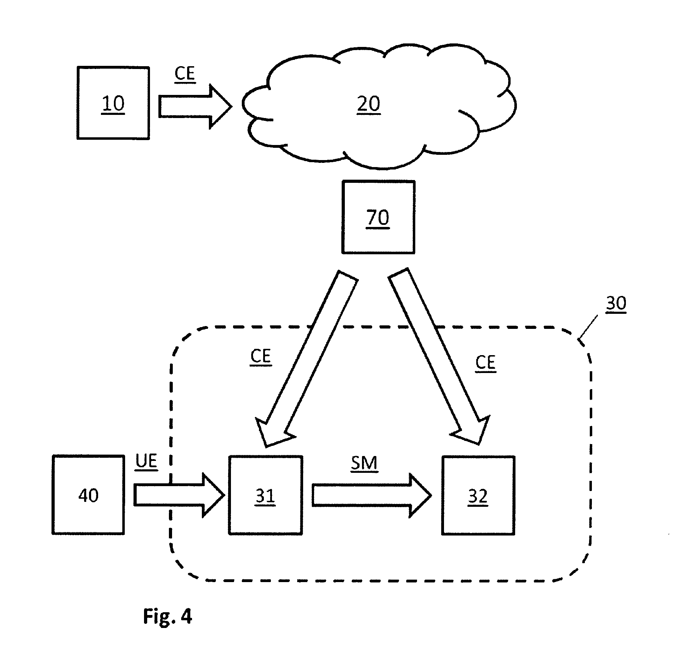

Figure 4 shows schematically a second embodiment of synchronizing data related to a communication event according to the present invention, wherein a third party 10 transmits a message CE over the mobile radio network 20 to a group of mobile devices 30, wherein the group of mobile devices 30 forms a MultiSIM community so that each mobile device 31, 32 of the MultiSIM community is available under the same phone number. Therefore, the message CE will be directed by a MultiSIM application server 70 to both the first mobile device 31 and the second mobile device 32. The message CE is received by the first and second mobile device 31, 32 and is stored in the first and second mobile device 31, 32, wherein furthermore in the first and second mobile device 31, 32 a message state is generated indicating that the message CE is "unread". By sending a user action event UE, e. g., a command using the user interface of the first mobile device 31, to the first mobile device 31 a user reads the message CE stored in the first mobile device 31 via the graphical user interface of the first mobile device and, thus, the message state of the message CE on the first mobile device 31 is changed from "unread" to "read", wherein the message state of the message CE stored in the second mobile device still indicates that the message CE is "unread". Due to the user action event UE a synchronization message SM is generated by a processing means of the first mobile device 31 according to the description of Figure 1, wherein the synchronization message SM comprises information that the message state of the message CE stored in the first mobile device 31 has been changed to "read", wherein the synchronization message SM is transmitted to the second mobile device 32, wherein the synchronization message SM is received by the second mobile device 32 and handled by a processing means of the second mobile device 32 such that the message state of the message CE on the second mobile device 32 is changed from "unread" to "read". According to the present invention, it is, thereby, advantageously possible to assure that message states of the message CE stored in the first and second mobile device 31,32 are kept consistent to each other.

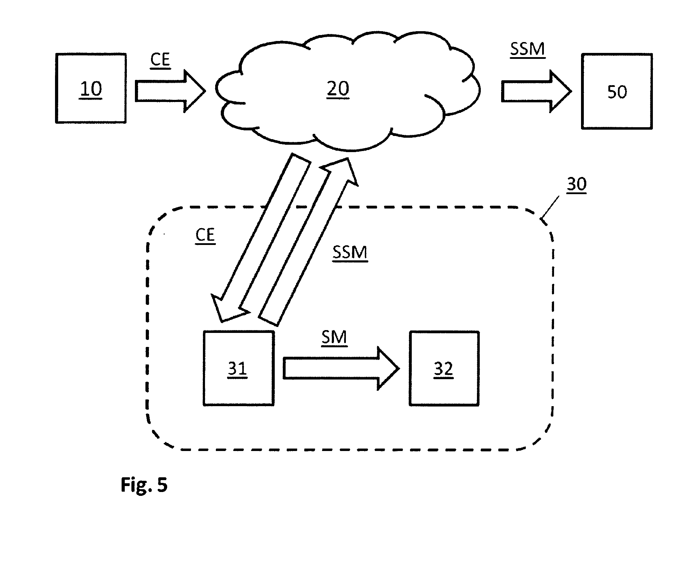

Figure 5 shows schematically a third embodiment of synchronizing data related to a communication event according to the present invention, wherein similar to the first embodiment illustrated in Figure 3 a third party 10 transmits a message CE to a first mobile device 31 of a group of mobile devices 30, wherein due to the reception of the message CE a first data element stored in the first mobile device 31 is modified, wherein the modified data element is related to the message CE and wherein the modified first data element is synchronized with a second data element of the second mobile device 32 by the transmission of a synchronization message SM from the first mobile device 31 to the second mobile device 32. Furthermore, a server synchronization message SSM is generated by the processing means of the first mobile device 31, wherein the server synchronization message SSM is related to the synchronization message SM and wherein the server synchronization message SSM is transmitted to a subscription server 50 over a mobile radio network 20 using, e. g., a SMS or GPRS. The server synchronization message SSM is received by the subscription server 50 and data related to the server synchronization message SSM is stored in a server database. According to the present invention, it is preferred that the stored data related to the server synchronization message SSM is accessible by additional network instances (not illustrated) and can be used for further processing, e. g., to bill the user of the first mobile device 31 for using the illustrated synchronization service.

## Claims

1. Method for synchronizing data related to a communication event (CE) between a first mobile device (31) and a second mobile device (32), wherein the communication event (CE) is a voice and/or data transfer between the first mobile device (31) and the second mobile device (32), wherein the first mobile device (31) and the second mobile device (32) comprise means (63) to communicate with a mobile radio network (20), wherein the first mobile device (31) and the second mobile device (32) comprise processing means (60), wherein a first step comprises that due to a user action event (UE) related to the communication event (CE) the processing means (60) of the first mobile device (31) modifies a first data element stored in the first mobile device (31), wherein the first data element and the modified first data element are related to the communication event (CE), wherein a second step comprises that the processing means (60) of the first mobile device (31) generates a synchronization message (SM), wherein the synchronization message (SM) is related to the modification of the first data element, wherein a third step comprises that the synchronization message (SM) is transmitted from the first mobile device (31) to the second mobile device (32), wherein a fourth step comprises the reception and the handling of the synchronization message (SM) by the processing means (60) of the second mobile device (32) such that a second data element stored in the second mobile device (32) is modified, wherein the modified second data element corresponds to the modified first data element.

2. Method according to claim 1, **characterized in that** the synchronization message (SM) is transmitted over the mobile radio network (20).

3. Method according to any of the preceding claims, wherein the first data element and/or the modified first data element comprise information of a message state and/or a call state.

4. Method according to any of the preceding claims, wherein the first data element and/or the modified first data element comprise information of a message.

5. Method according to any of the preceding claims, wherein the processing means 60 comprises a database (61), wherein the database (61) comprises a list of second mobile devices (32, 33), wherein the synchronization message SM is transmitted to at
least a portion of the list of second mobile devices (32, 33).

6. Method according to claim 4, wherein the database (60) comprises that a list of preferred communication channels is assigned to each one of the list of second mobile devices (32, 33), wherein at least one of the preferred communication channels is used to transmit the synchronization message (SM) to the portion of the list of second mobile devices (32, 33).

7. Method according to any of the preceding claims, wherein a fifth step comprises that a server synchronization message (SSM) is generated by the processing means (60) of the first mobile device (31), wherein the server synchronization message (SSM) is related to the synchronization message (SM), wherein a sixth step comprises that the server synchronization message (SSM) is transmitted to a subscription server (50), wherein the subscription server (50) comprises a server database (51), wherein a seventh step comprises that data related to the server synchronization message (SSM) is stored in the server database (51).

8. Mobile device (31), wherein the mobile device (31) comprises a processing means (60), wherein the mobile device (31) comprises functionality to perform a method for synchronizing data related to a communication event (CE) between the mobile device (31) and a second mobile device (32) according to any of the preceding claims.

9. Processing means (60) for synchronizing data related to a communication event (CE) between a first mobile device (31) and a second mobile device (32), wherein the processing means (60) comprises functionality to modify a data element of the first mobile device (31) due to a user action event (UE) related to the communication event (CE), wherein the modified data element is related to the communication event (CE), wherein the processing means (60) comprises functionality to generate a synchronization message (SM) related to the modification of the data element, wherein the processing means (60) comprises functionality to receive and to handle the synchronization message (SM) according to any of the claims 1 to 7.

10. Processing means (60) for a mobile device (31) according to claim 9, wherein the processing means (60) comprises a database (61), wherein the database (61) comprises a list of second mobile devices (32, 33), wherein the database (61) comprises a list of preferred communication channels assigned to each one of the list of second mobile devices (32, 33).

11. System of a mobile radio network (20), wherein the system comprises a first mobile device (31) and a second mobile device (32), wherein the communication between the first mobile device (31) and the second mobile device (32) comprises a synchronization message (SM) according to any of the claims 1 to 7.

12. System of a mobile radio network (20) according to claim 11, wherein the system comprises a subscription server (50), wherein the communication between the first mobile device (31) and the subscription server (50) comprises a server synchronization message (SSM) according to claim 7.

13. Program (62) comprising a computer readable program code that when executed on a processing means (60) performs a method for synchronizing data related to a communication event (CE) between a first mobile device (31) and a second mobile device (32) according to any of the claims 1 to 7.

14. Computer program product comprising computer readable program code that when executed on a processing means (60) performs a method to synchronize data related to a communication event between a first mobile device (31) and a second mobile device (32) according to the claims 1 to 7.
